# EUROPEAN PATENT APPLICATION

(11) **EP 4 661 247 A1**
(43) Date of publication of application: **10.12.2025**
(21) Application number: 23919913.6
(22) Date of filing: 05.12.2023
(51) Int. Cl.: H02J 50/80, H02J 7/00, H02J 50/12

(54) **IN-TRAVEL WIRELESS CHARGING SYSTEM, CHARGING DEVICE, AND POWER RECEIVING DEVICE**

(30) Priority: 31.01.2023 JP 2023013153
(71) Applicant: TOYOTA JIDOSHA KABUSHIKI KAISHA, Toyota-shi Aichi 471-8571 (JP); DENSO CORPORATION, Kariya-shi, Aichi 448-8661 (JP)
(72) Inventor: HASHIMOTO, Toshiya, Toyota-shi, Aichi 471-8571 (JP); MAEMURA, Masato, Toyota-shi, Aichi 471-8571 (JP); TSUGE, Shogo, Toyota-shi, Aichi 471-8571 (JP); IKEMURA, Ryosuke, Toyota-shi, Aichi 471-8571 (JP); KANESAKI, Masaki, Kariya-shi, Aichi 448-8661 (JP); YAMAGUCHI, Nobuhisa, Kariya-shi, Aichi 448-8661 (JP); SUMIYA, Hayato, Kariya-shi, Aichi 448-8661 (JP); OBAYASHI, Kazuyoshi, Kariya-shi, Aichi 448-8661 (JP); TANI, Keisuke, Kariya-shi, Aichi 448-8661 (JP)
(74) Representative: Cabinet Beau de Loménie
(86) International application number: PCT/JP2023/043503
(87) International publication number: WO 2024/161778

(57) **Abstract**

An in-motion non-contact power supply system of the present invention is an in-motion non-contact power supply system that supplies power in a non-contact manner from a road-side power supply device to a vehicle in motion equipped with a vehicle-side power reception device, in which information obtained through wide-range wireless communication and information obtained through short-range wireless communication are compared, and in a case where the information obtained through wide-range wireless communication and the information obtained through short-range wireless communication are consistent, a power supply operation from the road-side power supply device to the vehicle-side power reception device is performed, and in a case of inconsistency, a predetermined operation is performed.

## Description

### Field

The present invention relates to in-motion non-contact power supply systems, power supply devices, and power reception devices.

### Background

Patent Literature 1 discloses a technology that includes a communication unit performing wireless communication between a power transmission device and a power reception device and switching the communication range between a wide communication range and a short communication range.

### Citation List

### Patent Literature

Patent Literature 1: Japanese Laid-open Patent Publication No. 2013-240132

### Summary

### Technical Problem

An in-motion non-contact power supply, in which power is supplied in a non-contact manner from a power transmission device to a vehicle equipped with a power reception device while the vehicle is in motion, employs different types of wireless communication, including wide-range wireless communication that transmits a large amount of information over a wide range but has a slower response time, and short-range wireless communication that transmits a smaller amount of information over a short range but has a faster response time. Accordingly, if a discrepancy exists in information, such as requested power, between wide-range wireless communication and short-range wireless communication, improvements are needed in determining the appropriate operation to be executed.

The present invention has been made in view of the challenges mentioned above, and is intended to provide an in-motion non-contact power supply system, power supply device, and power reception device that are capable of performing a predetermined operation corresponding to the consistency between information obtained through wide-range wireless communication and information obtained through short-range wireless communication.

### Solution to Problem

To resolve the above problem and attain the object, an in-motion non-contact power supply system according to the present invention supplies power in a non-contact manner from a road-side power supply device to a vehicle in motion equipped with a vehicle-side power reception device. Further, the road-side power supply device includes a first communication device and a second communication device, the first communication device performing wide-range wireless communication with the vehicle-side power reception device, the second communication device performing short-range wireless communication with the vehicle-side power reception device, the short-range wireless communication being capable of communicating a smaller amount of information than the wide-range wireless communication and having a faster response time than the wide-range wireless communication, the vehicle-side power reception device includes a third communication device and a fourth communication device, the third communication device performing the wide-range wireless communication with the road-side power supply device, the fourth communication device performing the short-range wireless communication with the road-side power supply device, the road-side power supply device includes a consistency verification means comparing information obtained through the wide-range wireless communication transmitted from the third communication device and acquired by the first communication device with information obtained through the short-range wireless communication transmitted from the fourth communication device and acquired by the second communication device, and to determine consistency between the information obtained through the wide-range wireless communication and the information obtained through the short-range wireless communication by considering a difference in latency between the wide-range wireless communication and the short-range wireless communication, the consistency verification means compares the information obtained through the wide-range wireless communication with the information obtained through the short-range wireless communication, the road-side power supply device, in a case where the information obtained through the wide-range wireless communication and the information obtained through the short-range wireless communication are consistent, performs a power supply operation to the vehicle-side power reception device, and the road-side power supply device, in the case where the information obtained through the wide-range wireless communication and the information obtained through the short-range wireless communication are inconsistent, performs a predetermined operation.

Accordingly, this makes it possible for the in-motion non-contact power supply system according to the present invention to perform the operation corresponding to the consistency between the information obtained through wide-range wireless communication and the information obtained through short-range wireless communication by considering the communication latency of the wide-range wireless communication.

In the in-motion non-contact power supply system according to the above, the consistency verification means may include a time measurement means measuring a discrepancy persistence time during which a discrepancy between the information obtained through the wide-range wireless communication and the information obtained through the short-range wireless communication persists, and the consistency verification means may determine that the information obtained through the wide-range wireless communication and the information obtained through the short-range wireless communication are inconsistent upon the discrepancy persistence time exceeding a predetermined time.

This makes it possible to determine that the inconsistency exists by considering the communication latency of the wide-range wireless communication.

In the in-motion non-contact power supply system according to the above, the information obtained through the wide-range wireless communication and the information obtained through the short-range wireless communication each may include a power request value, and the consistency verification means may determine that there is an inconsistency when a discrepancy exists between the power request value included in the information obtained through the wide-range wireless communication and the power request value included in the short-range wireless communication.

This makes it possible to perform the predetermined operation in the case where a discrepancy exists between the power request value included in the information obtained through wide-range wireless communication and the power request value included in short-range wireless communication.

In the in-motion non-contact power supply system according to the above, the consistency verification means may include a calculation means calculating a moving average of the power request value included in the information obtained through the wide-range wireless communication and a moving average of the power request value included in the information obtained through the short-range wireless communication, and the consistency verification means may determine the consistency by comparing the moving average of the power request value included in the information obtained through the wide-range wireless communication with the moving average of the power request value included in the information obtained through the short-range wireless communication.

This makes it possible to determine the consistency appropriately even in the case where the power request value included in the information obtained through short-range wireless communication fluctuates frequently.

In the in-motion non-contact power supply system according to the above, the consistency verification means may determine that there is a consistency when the power request value included in the information obtained through the wide-range wireless communication and the power request value included in the short-range wireless communication satisfy a condition in which one of the power request values falls within a predetermined range of the other power request value.

This makes it possible to determine that there is consistency even in the case where the power request value included in short-range wireless communication fluctuates, performing the power supply operation from the road-side power delivery device to the vehicle-side power reception device.

In the in-motion non-contact power supply system according to the above, the predetermined operation may include performing the power supply operation from the road-side power supply device to the vehicle-side power reception device using, as a target power value, a smaller one of the power request value included in the information obtained through the wide-range wireless communication and the power request value included in the information obtained through the short-range wireless communication.

This makes it possible to suppress overcharging.

In the in-motion non-contact power supply system according to the above, in the case where the information obtained through the wide-range wireless communication and the information obtained through the short-range wireless communication are inconsistent, the power supply operation from the road-side power supply device to the vehicle-side power reception device may be performed as the predetermined operation based on the information obtained through the short-range wireless communication.

This makes it possible to perform the power supply operation from the road-side power delivery device to the vehicle-side power reception device with an amount of power close to the actual request of the vehicle even in the case where the wide-range wireless communication is interrupted and it is determined that there is the inconsistency.

In the in-motion non-contact power supply system according to the above, in the case where the information obtained through the wide-range wireless communication and the information obtained through the short-range wireless communication are inconsistent, the power supply operation from the road-side power supply device to the vehicle-side power reception device may be stopped as the predetermined operation.

This makes it possible to suppress overcharging.

Furthermore, according to the above configuration, in the event of an inconsistency between the information obtained through wide-range wireless communication and the information obtained through short-range wireless communication, the power supply operation from the road-side power supply device to the vehicle-side power reception device may be performed as the predetermined operation, based on the more recent information of the information obtained through wide-range wireless communication and the information obtained through short-range wireless communication.

This makes it possible to perform the power supply operation from the road-side power supply device to the vehicle-side power reception device based on the more recent information in chronological order.

Further, the power supply device according to the present invention is a power supply device provided on a road on which a vehicle is in motion to supply power in a non-contact manner to the vehicle equipped with a vehicle-side power reception device. In this configuration, the power supply device includes, a first communication device performing wide-range wireless communication with a third communication device of the vehicle-side power reception device; a second communication device performing short-range wireless communication, capable of communicating a smaller amount of information than the wide-range wireless communication and having a faster response time than the wide-range wireless communication, with a fourth communication device of the vehicle-side power reception device; and a consistency verification means comparing information obtained through wide-range wireless communication transmitted from the third communication device and acquired by the first communication device with information obtained through short-range wireless communication transmitted from the fourth communication device and acquired by the second communication device, and determining consistency between the information obtained through wide-range wireless communication and the information obtained through short-range wireless communication by considering a difference in latency between the wide-range wireless communication and the short-range wireless communication, and in this configuration, the consistency verification means compares the information obtained through wide-range wireless communication with the information obtained through short-range wireless communication, the power supply device performs a power supply operation to the vehicle-side power reception device if the information obtained through wide-range wireless communication and the information obtained through short-range wireless communication are consistent, and the power supply device performs a predetermined operation if the information obtained through wide-range wireless communication and the information obtained through short-range wireless communication are inconsistent.

This makes it possible for the power supply device according to the present invention to perform an operation corresponding to the consistency between the information obtained through wide-range wireless communication and the information obtained through short-range wireless communication by considering the communication latency of the wide-range wireless communication.

Further, the power reception device according to the present invention is a power reception device mounted on a vehicle in motion to receive power supplied in a non-contact manner from a road-side power supply device, in this configuration, the power reception device includes a third communication device performing wide-range wireless communication with a first communication device of the road-side power supply device; and a fourth communication device performing short-range wireless communication capable of communicating a smaller amount of information than the wide-range wireless communication and having a faster response time than the wide-range wireless communication with a second communication device of the road-side power supply device, and in this configuration, the road-side power supply device includes a consistency verification means comparing information obtained through wide-range wireless communication transmitted from the third communication device and acquired by the first communication device with information obtained through short-range wireless communication transmitted from the fourth communication device and acquired by the second communication device and determining consistency between the information obtained through wide-range wireless communication and the information obtained through short-range wireless communication by considering a difference in latency between the wide-range wireless communication and the short-range wireless communication, the consistency verification means compares the information obtained through wide-range wireless communication and the information obtained through short-range wireless communication, the power reception device receives power through the power supply operation from the road-side power supply device if the information obtained through wide-range wireless communication and the information obtained through short-range wireless communication are consistent, and the road-side power supply device performs a predetermined operation if the information obtained through wide-range wireless communication and the information obtained through short-range wireless communication are inconsistent.

This makes it possible for the power reception device according to the present invention to perform an operation corresponding to the consistency between the information obtained through wide-range wireless communication and the information obtained through short-range wireless communication by considering the communication latency of the wide-range wireless communication.

### Advantageous Effects of Invention

The in-motion non-contact power supply system, power supply device, and power reception device according to the present invention achieve the effect of performing the predetermined operation corresponding to the consistency between the information obtained through wide-range wireless communication and the information obtained through short-range wireless communication.

### Brief Description of Drawings

FIG. 1 is a schematic diagram illustrating a wireless power transfer system according to an embodiment.
FIG. 2 is a diagram illustrating the overall configuration of the wireless power transfer system.
FIG. 3 is a schematic diagram illustrated to describe wide-range wireless communication in the wireless power transfer system.
FIG. 4 is a block diagram illustrated to describe the functional configuration of a power transmission ECU.
FIG. 5 is a block diagram illustrated to describe the functional configuration of a vehicle ECU.
FIG. 6 is a diagram illustrated to describe a power transfer process.
FIG. 7 is a sequence diagram illustrating a case where communication is performed between a vehicle and a power delivery device using wide-range wireless communication.
FIG. 8 is a sequence diagram illustrating an operation following the completion of in-motion power supply from the power delivery device to the vehicle.
FIG. 9 is a flowchart illustrating a first example of control for performing power transfer by comparing information obtained through wide-range wireless communication with information obtained through short-range wireless communication.
FIG. 10 is a flowchart illustrating a second example of control for performing power transfer by comparing information obtained through wide-range wireless communication with information obtained through short-range wireless communication.

### Description of Embodiments

Embodiments of an in-motion non-contact power supply system, power supply device, and power reception device according to the present invention are now described. Moreover, the present invention is not intended to be limited to embodiments described herein.

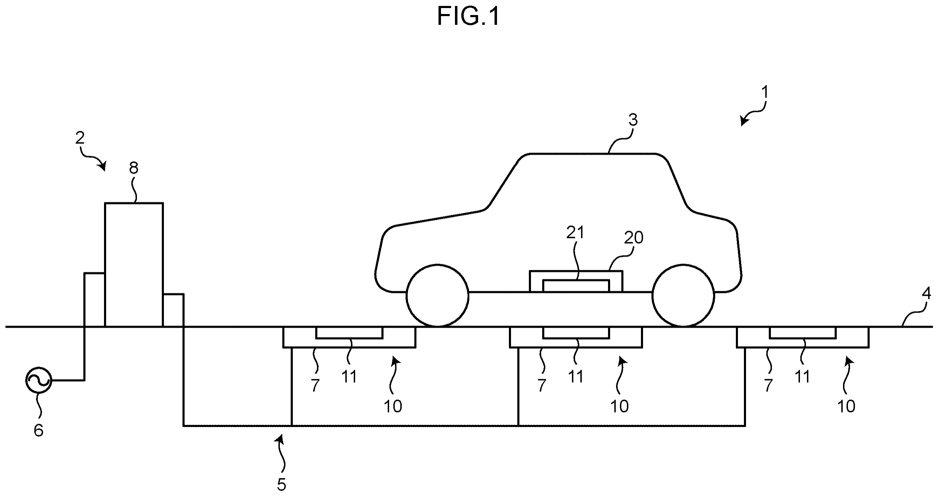

FIG. 1 is a schematic diagram illustrating a wireless power transfer system 1 according to an embodiment. The wireless power transfer system 1 includes a power delivery installation 2 and a vehicle 3, and is an in-motion non-contact power supply system that supplies power from the power delivery installation 2 to the vehicle 3 while the vehicle is in motion. The power delivery installation 2 is equipment that delivers power to the vehicle 3 in a non-contact manner while the vehicle 3 is in motion. The vehicle 3 is an electric vehicle capable of being charged with power supplied from an external power source, such as a battery electric vehicle (BEV) or a plug-in hybrid electric vehicle (PHEV).

The wireless power transfer system 1 performs wireless power transfer from the power delivery installation 2 to the vehicle 3 using magnetic field resonant coupling (magnetic resonance). The wireless power transfer system 1 transfers power in a non-contact manner from the power delivery installation 2 to the vehicle 3 in motion on a road 4. In other words, the wireless power transfer system 1 transfers power using a magnetic resonance technique to implement power supply to the vehicle 3 while the vehicle is in motion by employing magnetic field resonant coupling (magnetic resonance). The wireless power transfer system 1 can be described as a dynamic wireless power transfer (D-WPT) system or a magnetic field dynamic wireless power transfer (MF-D-WPT) system.

The power delivery installation 2 includes a power delivery device 5 that is a road-side power supply device (power supply device) and an alternating current (AC) power source 6 that supplies power to the power delivery device 5. The power delivery device 5 transfers power supplied from the AC power source 6 to the vehicle 3 in a non-contact manner. The AC power source 6 is, for example, a commercial power source. The power delivery device 5 includes a power transmission device 10 provided with a primary coil 11.

The power delivery device 5 includes a segment 7 provided with the primary coil 11 and a management device 8 that manages the segment 7. The segment 7 is embedded in the lane of the road 4. The management device 8 is installed at a roadside of the road 4. The segment 7 is electrically connected to the management device 8. The management device 8 is electrically connected to the AC power source 6 and supplies power from the AC power source 6 to the segment 7. The segment 7 is electrically connected to the AC power source 6 via the management device 8. The segment 7 can be arranged in multiple configurations along the lane of the road 4. For example, as illustrated in FIG. 1, in the power delivery device 5, three segments 7 are arranged in a row along the lane of the road 4 and one management device 8 is connected to the three segments 7. The segment 7 has the function of transferring power in a non-contact manner from the power delivery device 5 to the vehicle 3. The management device 8 has the function of controlling wireless power transfer in the segment 7.

The vehicle 3 includes a power reception device 20, which is a vehicle-side power reception device provided with a secondary coil 21. The power reception device 20 is provided at the bottom of the vehicle body of the vehicle 3. In the case where the vehicle 3 is in motion on the road 4 on which the primary coil 11 is installed, the primary coil 11 on the ground side and the secondary coil 21 on the vehicle side face each other in the vertical direction. The wireless power transfer system 1 transfers power in a non-contact manner from the primary coil 11 of the power transmission device 10 to the secondary coil 21 of the power reception device 20 while the vehicle 3 is in motion on the road 4.

In the description herein, the phrase "while the vehicle is in motion" refers to the state in which the vehicle 3 is located on the road 4 and is traveling or driving. The phrase "while the vehicle is in motion" also encompasses a situation in which the vehicle 3 is temporarily stopped on the road 4. For example, a state in which the vehicle 3 is stopped on the road 4 due to waiting at a traffic light is also included in "while the vehicle is in motion". On the other hand, even in the case where the vehicle 3 is positioned on the road 4, such as when the vehicle 3 is parked or stopped, this situation is not considered to be "while the vehicle is in motion".

Further, in the description herein, a lane in which the primary coil 11 (the segment 7) is embedded can be referred to as a D-WPT lane, and a section of the road 4 where wireless power transfer by the power delivery device 5 is enabled can be referred to as a D-WPT charging site. In both the D-WPT lane and the D-WPT charging site, a plurality of primary coils 11 (multiple segments 7) is installed in a row in the direction of travel of the vehicle 3 over a predetermined section of the road 4.

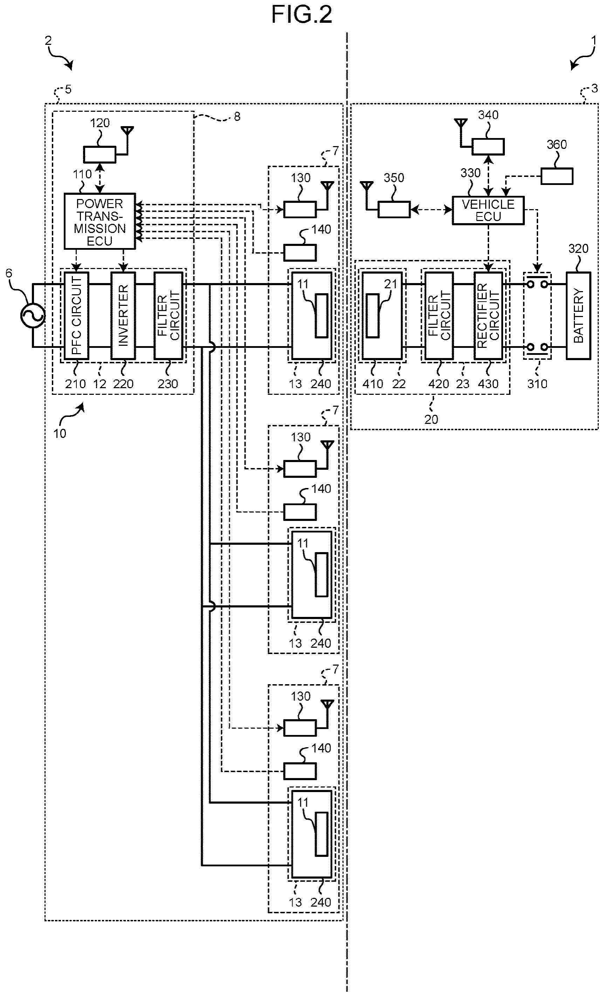

FIG. 2 is a diagram illustrating the overall configuration of the wireless power transfer system 1. In the power delivery installation 2, the power delivery device 5 and the AC power source 6 are electrically connected. In the power delivery device 5, the segment 7 and the management device 8 are electrically connected.

The power delivery device 5 includes a configuration provided in the management device 8 and a configuration provided in the segment 7. The power delivery device 5 includes the power transmission device 10, a power transmission electronic control unit (ECU) 110, a first communication device 120, a second communication device 130, and a foreign object detection device 140.

The power transmission device 10 includes an electric circuit connected to the AC power source 6. The power transmission device 10 includes a power factor collection (PFC) circuit 210, an inverter (INV) 220, a filter circuit 230, and a power transmission-side resonant circuit 240.

The PFC circuit 210 improves the power factor of the AC power received from the AC power source 6, converts the AC power into direct current (DC) power, and then outputs the DC power to the inverter 220. The PFC circuit 210 includes an AC/DC converter. The PFC circuit 210 is electrically connected to the AC power source 6.

The inverter 220 converts the DC power received from the PFC circuit 210 into AC power. The inverter 220 includes a switching element, such as, but not limited to, an insulated gate bipolar transistor (IGBT) or a metal-oxide-semiconductor field-effect transistor (MOSFET), in which the switching element performs a switching operation responsive to a control signal from the power transmission ECU 110. The inverter 220 has, for example, an operating frequency of 85 kHz. The inverter 220 outputs the converted AC power to the filter circuit 230.

The filter circuit 230 removes noise contained in the AC current received from the inverter 220 and supplies the noise-filtered AC power to the power transmission-side resonant circuit 240. The filter circuit 230 is an LC filter provided with a combined coil and capacitor. In one example, the filter circuit 230 is configured as a T-type filter in which two coils and one capacitor are arranged in a T-shaped configuration. The PFC circuit 210, the inverter 220, and the filter circuit 230 together constitute a power conversion unit 12 of the power transmission device 10.

The power transmission-side resonant circuit 240 is a power transmission unit that transfers the AC power supplied from the filter circuit 230 to the power reception device 20 in a non-contact manner. Such supply of the AC power from the filter circuit 230 to the power transmission-side resonant circuit 240 causes a current to flow through the primary coil 11, generating a magnetic field for power transmission.

The power transmission-side resonant circuit 240 includes the primary coil 11 and a resonant capacitor. The primary coil 11 is a power transmission coil. The resonant capacitor is connected in series at one end of the primary coil 11 to adjust the resonant frequency of the power transmission-side resonant circuit. The resonant frequency ranges from 10 kHz to 100 GHz, with a preferred value of 85 kHz. For example, the power transmission device 10 is configured so that the resonant frequency of the power transmission-side resonant circuit 240 matches the operating frequency of the inverter 220. The power transmission-side resonant circuit 240 constitutes a primary device 13 of the power transmission device 10.

The power transmission device 10 includes the power conversion unit 12 and the primary device 13. The power conversion unit 12 includes the PFC circuit 210, the inverter 220, and the filter circuit 230. The primary device 13 includes the power transmission-side resonant circuit 240. The power transmission device 10 has a configuration in which the power conversion unit 12 is provided in the management device 8 and the primary device 13 is provided in the segment 7.

In the power delivery device 5, the management device 8 is provided with the power conversion unit 12 of the power transmission device 10, the power transmission ECU 110, and the first communication device 120, and the segment 7 is provided with the primary device 13 of the power transmission device 10, the second communication device 130, and the foreign object detection device 140.

The power transmission ECU 110 is an electronic control device that controls the power delivery device 5. The power transmission ECU 110 includes a processor and a memory. The processor is constituted by a central processing unit (CPU), a digital signal processor (DSP), a field-programmable gate array (FPGA), and the like. The memory is a main storage device and is constituted by random-access memory (RAM), read-only memory (ROM), or the like. The power transmission ECU 110 loads a program stored in a storage unit into the working area of the memory (main storage device) and executes it, and implements a function conforming to a predetermined purpose by controlling individual components through the execution of the program. The storage unit is constituted by a recording medium such as erasable programmable ROM (EPROM), a hard disk drive (HDD), and removable media. Examples of removable media include disk recording media such as a universal serial bus (USB) memory, a compact disc (CD), a digital versatile disc (DVD), and a Blu-ray (registered trademark) disc (BD). The memory unit is capable of storing an operating system (OS), various programs, various tables, and various databases. The power transmission ECU 110 receives signals from various sensors. The power transmission ECU 110 also receives a signal from the foreign object detection device 140. Then, the power transmission ECU 110 executes various controls based on signals received from various sensors.

In one example, the power transmission ECU 110 executes power control to adjust the power for transmission. In the power control, the power transmission ECU 110 controls the power transmission device 10. The power transmission ECU 110 outputs a control signal to the power conversion unit 12 to control the power supplied to the primary device 13 from the power conversion unit 12. The power transmission ECU 110 adjusts the transmission power by controlling a switching element included in the PFC circuit 210 and by controlling a switching element included in the inverter 220.

Further, the power transmission ECU 110 executes communication control to control communication with the vehicle 3. In the communication control, the power transmission ECU 110 controls the first communication device 120 and the second communication device 130.

The first communication device 120 is a ground-based communication device that performs wide-range wireless communication. The first communication device 120 performs wireless communication with the vehicles 3 in motion on the road 4, specifically with the vehicle 3 before approaching the D-WPT lane. The state before approaching the D-WPT lane refers to a condition in which the vehicle 3 is located such that the vehicle 3 is not yet able to perform short-range wireless communication with the power delivery device 5.

The wide-range wireless communication refers to communication with a communication range of 10 meters to 10 kilometers. The wide-range wireless communication is communication with a longer communication distance than short-range wireless communication. Various types of wireless communication techniques having extended communication distances are employable for wide-range wireless communication. For example, communication conforming to communication standards such as 4G, LTE, 5G, and WiMAX, which are formulated by 3GPP (registered trademark) and IEEE, is employed for wide-range wireless communication. In the wireless power transfer system 1, wide-range wireless communication is employed to transmit vehicle information associated with vehicle identification information (vehicle ID) from the vehicle 3 to the power delivery device 5.

The second communication device 130 is a ground-based communication device that performs short-range wireless communication. The second communication device 130 performs wireless communication with the vehicles 3 in motion on the road 4, specifically with the vehicle 3 that is approaching or entering the D-WPT lane. The state in which the vehicle 3 is approaching the D-WPT lane refers to a condition in which the vehicle 3 is located such that the vehicle 3 is capable of performing short-range wireless communication with the power delivery device 5.

The short-range wireless communication refers to communication with a communication distance of less than 10 meters. The short-range wireless communication has a shorter communication distance than wide-range wireless communication. Various types of short-range wireless communication techniques having a short communication distance are employable for short-distance wireless communication. For example, communication conforming to any communication standards formulated by IEEE, ISO, IEC, or the like is employed for short-range wireless communication. Examples of such communication techniques for short-range wireless communication include Wi-Fi (registered trademark), Bluetooth (registered trademark), ZigBee (registered trademark), or the like. Alternatively, techniques such as radio frequency identification (RFID) or dedicated short-range communication (DSRC) can be employed for short-range wireless communication. In the wireless power transfer system 1, short-range wireless communication is employed to transmit vehicle identification information or the like from the vehicle 3 to the power delivery device 5.

The foreign object detection device 140 detects metallic foreign objects, living objects, and others that exist above the primary coil 11. The foreign object detection device 140 is constituted by, for example, a sensor coil and an image-capturing device installed on the ground. The foreign object detection device 140 is configured to enable the foreign object detection (FOD) and living object protection (LOP) features of the wireless power transfer system 1.

In the power delivery device 5, the configuration of the power transmission device 10 is divided and arranged into the segment 7 and the management device 8, with three segments 7 being connected to one management device 8. The power transmission device 10 is configured so that one inverter supplies power to three power transmission-side resonant circuits 240. Additionally, in the power delivery device 5, the management device 8 receives a signal from each segment 7. The power transmission ECU 110 receives signals from the second communication device 130 and a foreign object detection device 14 which are provided in a first segment. Similarly, the power transmission ECU 110 receives signals from the second communication device 130 and the foreign object detection device 14 provided in a second segment. The power transmission ECU 110 receives signals from the second communication device 130 and the foreign object detection device 14 provided in a third segment. The power transmission ECU 110 is capable of determining the status of each segment 7 based on the signal received from each segment 7.

The vehicle 3 includes the power reception device 20, a charging relay 310, a battery 320, a vehicle ECU 330, a third communication device 340, a fourth communication device 350, and a global positioning system (GPS) receiver 360.

The power reception device 20 supplies the power received from the power transmission device 10 to the battery 320. The power reception device 20 is electrically connected to the battery 320 via the charging relay 310. The power reception device 20 includes a power reception-side resonant circuit 410, a filter circuit 420, and a rectifier circuit 430.

The power reception-side resonant circuit 410 is a power reception unit that receives power transferred in a non-contact manner from the power transmission device 10. The power reception-side resonant circuit 410 is constituted by a power reception-side resonant circuit that includes a secondary coil 21 and a resonant capacitor. The secondary coil 21 is a power reception coil that receives power transferred in a non-contact manner from the primary coil 11. The resonant capacitor is connected in series to one end of the secondary coil 21 to adjust the resonant frequency of the power reception-side resonant circuit. The resonant frequency of the power reception-side resonant circuit 410 is set to match the resonant frequency of the power transmission-side resonant circuit 240.

The power reception-side resonant circuit 410 has a resonant frequency that is identical to the resonant frequency of the power transmission-side resonant circuit 240. For this reason, the generation of magnetic field by the power transmission-side resonant circuit 240 with the power reception-side resonant circuit 410 being positioned to face the power transmission-side resonant circuit 240 causes the oscillation of the generated magnetic field to be transmitted to the power reception-side resonant circuit 410. This causes the primary coil 11 and the secondary coil 21 to be in a resonant state. This electromagnetic induction causes an induced current to flow through the secondary coil 21, which generates an induced electromotive force in the power reception-side resonant circuit 410. This configuration allows the power reception-side resonant circuit 410 to receive the power transferred in a non-contact manner from the power transmission-side resonant circuit 240. Then, the power reception-side resonant circuit 410 supplies the power received from the power transmission-side resonant circuit 240 to the filter circuit 420. The power reception-side resonant circuit 410 constitutes a secondary device 22 of the power reception device 20.

The filter circuit 420 removes noise contained in the AC current received from the power reception-side resonant circuit 410 and supplies the noise-filtered AC power to the rectifier circuit 430. The filter circuit 420 is an LC filter provided with a combined coil and capacitor. In one example, the filter circuit 420 is configured as a T-type filter in which two coils and one capacitor are arranged in a T-shaped configuration.

The rectifier circuit 430 converts the AC power received from the filter circuit 420 into DC power and supplies the converted DC power to the battery 320. The rectifier circuit 430 is configured, for example, as a full-bridge circuit in which four diodes, as rectifying elements, are connected in a full-bridge arrangement. In the rectifier circuit 430, switching elements are connected in parallel with the respective diodes. Each switching element of the rectifier circuit 430 is configured using an IGBT and performs a switching operation in response to a control signal from the vehicle ECU 330. The rectifier circuit 430 supplies the converted DC power to the battery 320. The filter circuit 420 and the rectifier circuit 430 together constitute a power conversion unit 23 of the power reception device 20.

The power reception device 20 includes the secondary device 22 and the power conversion unit 23. The secondary device 22 includes the power reception-side resonant circuit 410. The power conversion unit 23 includes the filter circuit 420 and the rectifier circuit 430.

The charging relay 310 is provided between the rectifier circuit 430 and the battery 320. The charging relay 310 is controlled by the vehicle ECU 330 to switch between open and closed states. During the charging of the battery 320 by the power transmission device 10, the charging relay 310 is controlled to be in the closed state. With the charging relay 310 in the closed state, the electrical connection between the rectifier circuit 430 and the battery 320 allows current to flow. With the charging relay 310 in the open state, disconnection of electrical current between the rectifier circuit 430 and the battery 320 prevents current from flowing. For example, if the charging relay 310 is in the open state, the vehicle 3 does not issue a power supply request.

The battery 320 is a rechargeable DC power source and is constituted by, for example, a lithium-ion battery, a nickel-metal hydride battery, or the like. The battery 320 accumulates the power, which is supplied from the power transmission device 10 to the power reception device 20. Additionally, the battery 320 is also capable of supplying power to a traction motor of the vehicle 3. The battery 320 is electrically connected to the traction motor via a power control unit (PCU). The PCU is a power conversion device that converts the DC power of the battery 320 into AC power and supplies the AC power to the traction motor. The PCU has switching elements, each of which is constituted by an IGBT and configured to perform a switching operation in response to a control signal from the vehicle ECU 330.

The vehicle ECU 330 is an electronic control device that controls the vehicle 3. The vehicle ECU 330 has a hardware configuration similar to that of the power transmission ECU 110. The vehicle ECU 330 receives signals from various sensors mounted on the vehicle 3. In addition, the vehicle ECU 330 receives a positioning signal obtained from the GPS receiver 360. The vehicle ECU 330 is capable of acquiring information regarding the current position of the vehicle 3 from the GPS receiver 360. Then, the vehicle ECU 330 executes various control operations based on the signals received from various sensors.

In one example, the vehicle ECU 330 executes non-contact charging control, in which power is transferred from the primary coil 11 to the secondary coil 21 in a non-contact manner and the power received by the secondary coil 21 is accumulated in the battery 320. In the non-contact charging control, the vehicle ECU 330 controls the rectifier circuit 430, the charging relay 310, the third communication device 340, and the fourth communication device 350. The non-contact charging control includes power control, which controls the charging power and communication control, which controls communication with the power delivery device 5. In the power control, the vehicle ECU 330 controls the switching elements included in the rectifier circuit 430 to adjust the power (charging power) supplied to the battery 320 from the power reception device 20. In the communication control, the vehicle ECU 330 controls the third communication device 340 and the fourth communication device 350.

The third communication device 340 is a vehicle-side communication device that performs wide-range wireless communication. The third communication device 340 performs wireless communication with the first communication device 120 of the power delivery device 5 in the state before the vehicle 3 traveling on the road 4 is approaching the D-WPT lane. The wide-range wireless communication is bidirectional wireless communication. The communication between the first communication device 120 and the third communication device 340 is performed via high-data-rate wireless communication.

The fourth communication device 350 is a vehicle-side communication device that performs short-range wireless communication. The fourth communication device 350 performs wireless communication with the second communication device 130 of the power delivery device 5 with the vehicle 3 being in the state of approaching or entering the D-WPT lane. The short-range wireless communication is unidirectional wireless signaling. The unidirectional wireless signaling is point-to-point signaling (P2PS). The P2PS is used to notify vehicle identification information from the vehicle 3 to the power delivery device 5 during various activities, including pairing, alignment check, magnetic coupling check, power transfer termination, and power transfer termination. Additionally, the P2PS can also be used as a means for lateral alignment check (alignment verification). The term of lateral direction refers herein to the width direction of the lane, which corresponds to the width direction of the vehicle 3.

The GPS receiver 360 detects the current position of the vehicle 3 on the basis of positioning information obtained through multiple positioning satellites. The information regarding the current position of the vehicle 3 detected by the GPS receiver 360 is transmitted to the vehicle ECU 330.

Moreover, in the power delivery device 5, the filter circuit 230 can be included in the management device 8 rather than in the segment 7. In other words, the filter circuit 230 can be installed at the roadside of the road 4. In this case, the power conversion unit 12 includes the PFC circuit 210, the inverter 220, and the filter circuit 230, and the primary device 13 includes the power transmission-side resonant circuit 240.

In addition, the filter circuit 230 can be provided individually for each primary coil 11, or alternatively, it can be provided collectively for multiple primary coils 11.

Further, the filter circuit 230 is not limited to a T-type filter and can be, for example, a band-pass filter in which a coil and a capacitor are connected in series. This alternative configuration is also similarly applicable to the filter circuit 420 of the vehicle 3.

Additionally, in the power transmission device 10, in connecting the inverter 220 to the multiple primary coils 11, a changeover switch for switching the primary coil 11 targeted for energization can be provided in the respective primary devices 13. The changeover switch can be provided in the management device 8 at the roadside of the road 4 or in the vicinity of the primary coil 11.

Further, the power transmission-side resonant circuit 240 is not limited to the serial connection configuration between the primary coil 11 and the resonant capacitor. The parallel connection between the primary coil 11 and the resonant capacitor or a combination of series and parallel configurations is possible. In short, the power transmission-side resonant circuit 240 can be configured as long as the resonant frequency of the power transmission-side resonant circuit 240 matches the operating frequency of the inverter 220, and there is no particular limitation on the connection relationship between the components in the power transmission-side resonant circuit 240. This configuration is similarly applicable to the power reception-side resonant circuit 410 of the vehicle 3.

Additionally, the operating frequency of the inverter 220 is not limited to 85 kHz and can be within a range proximate to 85 kHz. In short, the operating frequency of the inverter 220 can be a predetermined frequency band that encompasses 85 kHz.

Further, the power transmission device 10 can be configured with the multiple inverters 220 connected to the output-side power line (DC power line) of the PFC circuit 210.

Additionally, the foreign object detection device 140 is not limited to being provided on the ground side, and it can also be provided on the vehicle 3. For example, in the case where the foreign object detection device on the vehicle 3 detects a foreign object or living object above the primary coil 11, the vehicle can be configured to stop the power supply request until the vehicle 3 traverses beyond the primary coil 11.

Further, in the wireless power transfer system 1, the information to be transmitted from the vehicle 3 to the power delivery device 5 using short-range wireless communication includes, in addition to the vehicle identification information, a power supply request, a power supply request value, and the like. The power supply request is information indicating a request for power transfer from the primary coil 11. The power supply request value is a requested value for the amount of power to be transferred from the power delivery device 5 to the vehicle 3. The vehicle ECU 330 is capable of calculating the power supply request value on the basis of the state of charge (SOC) of the battery 320.

Further, the wireless power transfer system 1 is not limited to the power supply from the ground to the vehicle 3 (ground-to-vehicle) but can also implement power supply from the vehicle 3 to the ground (vehicle-to-ground). In this case, the rectifier circuit 430 can be replaced with an inverter to achieve rectification during both power supply and power reception.

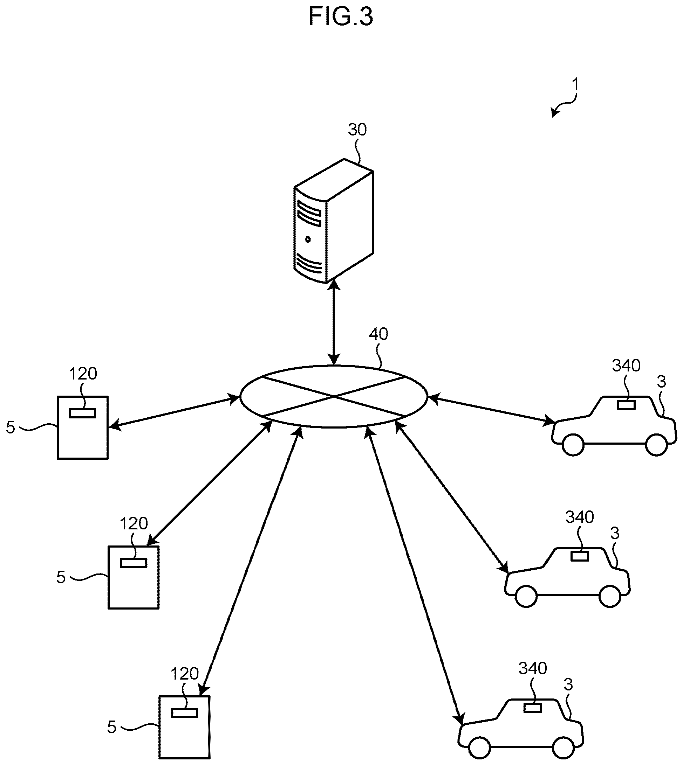

FIG. 3 is a schematic diagram illustrated to describe wide-range wireless communication in the wireless power transfer system 1.

In the wireless power transfer system 1, the vehicle 3 is capable of communicating with a server 30, and the power delivery device 5 is also capable of communicating with the server 30. The server 30 is connected to a network 40 and is capable of communicating with multiple vehicles 3 and power delivery devices 5 through the network 40. The network 40 is constituted by a wide area network (WAN) that is a public communication network such as the Internet, or a mobile telephone communication network, among others.

The vehicle 3 connects to the network 40 through wide-range wireless communication using the third communication device 340. The vehicle 3 transmits information to the server 30 and receives information from the server 30.

The power delivery device 5 connects to the network 40 through wide-range wireless communication using the first communication device 120. The power delivery device 5 transmits information to the server 30 and receives information from the server 30.

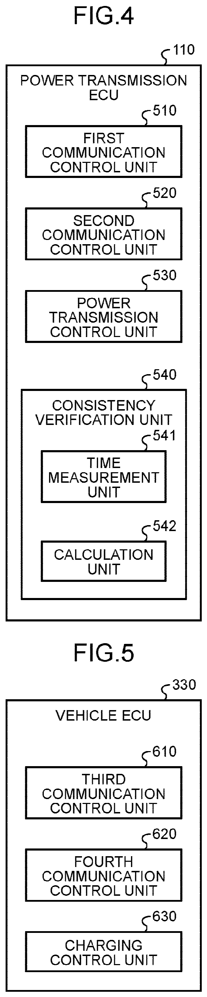

FIG. 4 is a block diagram illustrating the functional configuration of the power transmission ECU 110. The power transmission ECU 110 includes a first communication control unit 510, a second communication control unit 520, a power transmission control unit 530, and a consistency verification unit 540. Additionally, the consistency verification unit 540 includes a time measurement unit 541 and a calculation unit 542.

The first communication control unit 510 executes first communication control to control the first communication device 120. The first communication control is responsible for controlling the wide-range wireless communication on the side of the power delivery device 5 and controls the communication of the power delivery device 5 using the first communication device 120. In other words, in the first communication control, the communication of the management device 8 of the power delivery device 5 is controlled. In the first communication control, communication between the power delivery device 5 and the network 40 is controlled, and communication between the power delivery device 5 and the server 30 through the network 40 is controlled. The first communication control unit 510 is a supply equipment communication controller (SECC).

The second communication control unit 520 executes second communication control to control the second communication device 130. The second communication control is responsible for controlling the short-range wireless communication on the side of the power delivery device 5 and controls the communication of the power delivery device 5 using the second communication device 130. In other words, in the second communication control, communication concerning the segment 7 of the power delivery device 5 is controlled. In the second communication control, communication between the power delivery device 5 and the vehicle 3 is controlled as communication that does not involve the network 40. The second communication control unit 520 is a primary device communication controller (PDCC).

The power transmission control unit 530 executes power transmission control to control the power transmission device 10. The power transmission control is responsible for controlling the power for transmission and controls the power conversion unit 12 of the power transmission device 10. The power transmission control unit 530 executes power control to control the PFC circuit 210 and the inverter 220.

The consistency verification unit 540 is used as a consistency verification means capable of comparing information received through wide-range wireless communication from the third communication device 340 of the vehicle 3 with information received through short-range wireless communication from the fourth communication device 350 of the vehicle 3 and determining the consistency between the information obtained through wide-range wireless communication and the information obtained through short-range wireless communication by considering the difference in latency between the wide-range wireless communication and the short-range wireless communication, as calculated by the calculation unit 542.

The time measurement unit 541 The time measurement unit 541 is a time measuring means that measures a discrepancy persistence time, which is the duration during which a discrepancy persists between the information obtained through wide-range wireless communication and the information obtained through short-range wireless communication.

The calculation unit 542 is a calculation means capable of calculating both a moving average of the power request value included in the information obtained through wide-range wireless communication and a moving average of the power request value included in the information obtained through short-range wireless communication. In addition, the calculation unit 542 is capable of calculating the difference in latency between the wide-range wireless communication and the short-range wireless communication.

FIG. 5 is a block diagram illustrating the functional configuration of the vehicle ECU 330. The vehicle ECU 330 includes a third communication control unit 610, a fourth communication control unit 620, and a charging control unit 630.

The third communication control unit 610 executes third communication control to control the third communication device 340. In the third communication control, the wide-range wireless communication on the vehicle 3, and communication of the vehicle 3 using the third communication device 340 is controlled. In the third communication control, communication between the vehicle 3 and the network 40 is controlled, and communication between the vehicle 3 and the server 30 over the network 40 is controlled. The third communication control unit 610 is an EV communication controller (EVCC).

The fourth communication control unit 620 executes fourth communication control to control the fourth communication device 350. In the fourth communication control, the short-range wireless communication on the vehicle 3 is controlled, and the communication of the vehicle 3 using the fourth communication device 350 is controlled. In the fourth communication control, the communication between the vehicle 3 and the power delivery device 5 as communication that does not involve the network 40 is controlled. The fourth communication control unit 620 is a secondary device communication controller (SDCC).

The charging control unit 630 executes charging control to control the power reception device 20 and the charging relay 310. The charging control includes power control to control the power reception in the power reception device 20, and relay control to control the connection state between the secondary device 22 and the battery 320. The charging control unit 630 executes power control to control the rectifier circuit 430. The charging control unit 630 executes relay control to switch the open and closed states of the charging relay 310.

In the wireless power transfer system 1 configured as described above, wireless power transfer from the power delivery device 5 to the vehicle 3 is performed in a state where wireless communication between the vehicle 3 and the power delivery device 5 is established. Following wireless communication-based pairing between the vehicle 3 and the power delivery device 5, power is transferred in a non-contact manner from the primary coil 11 on the ground side to the secondary coil 21 on the vehicle side. Subsequently, in the vehicle 3, the charging control is performed to supply the power received by the secondary coil 21 to the battery 320.

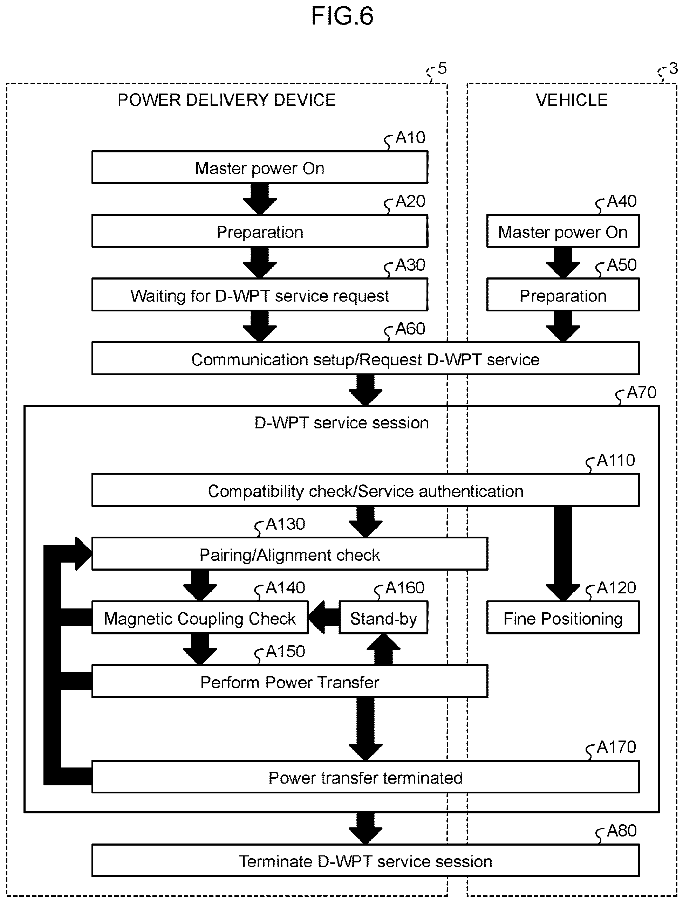

Next, the power transfer process (D-WPT process) is now described with reference to FIG. 6. The power transfer process is organized as a chain of multiple activities and is a process derived from states and corresponding transitions.

FIG. 6 is a diagram illustrated to describe the power transfer process. FIG. 6 illustrates basic activities for describing the power transfer process. The thick arrows in FIG. 6 represent transition lines. The state of the wireless power transfer system 1 in the power transfer process is represented by the activities that constitute the power transfer process.

The activities that constitute the power transfer process include a power transfer service session (D-WPT service session A70), which is an activity at the stage where power transfer is performed, as well as activities at the stage preceding the power transfer and activities at the stage following the power transfer. In addition, the operational subject of the activities can be separately described depending on the presence or absence of communication between the power delivery device 5 and the vehicle 3. The activities are divided into types of activities that represent a state of only the power delivery device 5 side without communication, types of activities that represent a state of only the vehicle 3 side without communication, and types of activities that represent a state of both the power delivery device 5 and the vehicle 3 with communication.

As illustrated in FIG. 6, the activities include the activity of master power on (Master power On) A10, the activity of preparation (Preparation) A20, the activity of waiting for a request from the vehicle 3 (Waiting for D-WPT service request) A30, the activity of master power on (Master power On) A40, the activity of preparation (Preparation) A50, the activity of communication setup and D-WPT service request (Communication setup and Request D-WPT service) A60, the activity of D-WPT service session (D-WPT service session) A70, and the activity of D-WPT service session termination (Terminate D-WPT service session) A80.

The preparation A20 is a state in which the power delivery device 5 undergoes preparation. In the preparation A20, the power delivery device 5 performs circuit activation and safety check without communicating with the vehicle 3. When the master power on A10 is reached, the power delivery device 5 transitions to the preparation A20. Then, if the power delivery device 5 completes the circuit activation and safety check in the preparation A20, the state transitions to the activity A30 of waiting for a request from the vehicle 3. On the other hand, in the event of an issue with the power delivery device 5, the power delivery device 5 notifies the vehicle 3 of information indicating that the wireless power transfer system 1 is unavailable (unavailability notification) through wide-range wireless communication. The first communication device 120 transmits the unavailability notification to the vehicle 3.

The preparation A50 is a state in which the vehicle 3 undergoes preparation. In the preparation A50, the vehicle 3 performs circuit activation and safety check without communicating with the power delivery device 5. When the master power on A40 is reached, the vehicle 3 transitions to the preparation A50. Then, if the vehicle 3 completes the circuit activation and safety check in the preparation A50, the state transitions to the state of communication setup and D-WPT service request A60. On the other hand, in the event of an issue with the vehicle 3, the vehicle 3 does not initiate the wide-range wireless communication and does not perform subsequent sequences in the D-WPT process.

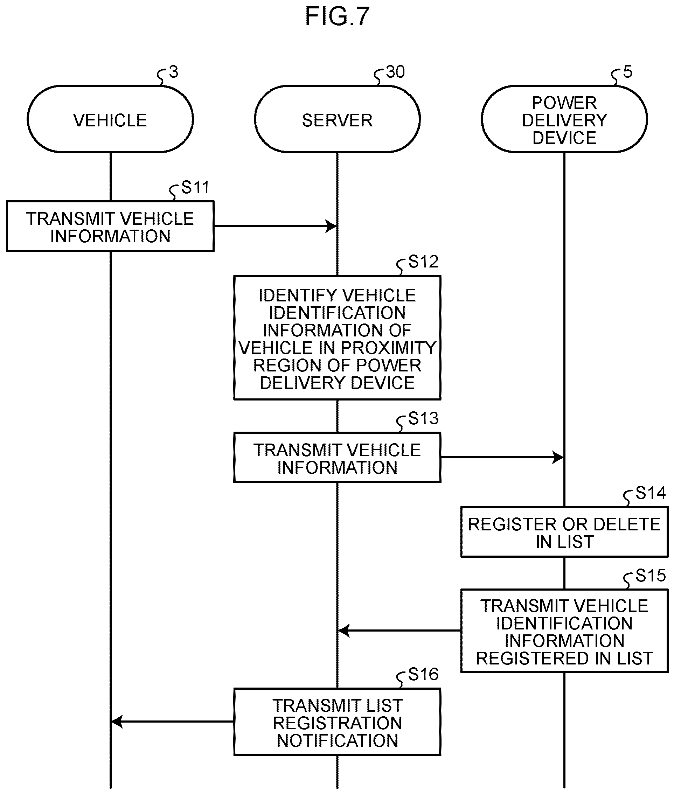

The communication setup and D-WPT service request A60 is initiated by the vehicle ECU 330. In the communication setup and D-WPT service request A60, the vehicle ECU 330 initiates the wide-range wireless communication. Initially, when the vehicle 3 transitions from the preparation A50 to the communication setup and D-WPT service request A60, the third communication device 340 transmits a D-WPT service request signal. The third communication device 340 performs wireless communication with the first communication device 120 corresponding to the D-WPT lane into which the vehicle 3 intends to enter or is entering. The first communication device 120 targeted for communication is selected based on the relative positional relationship between the current position of the vehicle 3 and the position of the D-WPT lane. On the power delivery device 5 side, in the activity A30 of waiting for D-WPT service request from the vehicle 3, if the first communication device 120 receives the D-WPT service request signal, the state transitions to the communication setup and D-WPT service request A60. Various types of information for the wide-range wireless communication and the P2PS communication are linked using the vehicle identification information. The processing sequence for the communication setup and D-WPT service request A60 is illustrated in FIG. 7.

FIG. 7 is a sequence diagram illustrating a case where communication using the wide-range wireless communication is performed between the vehicle 3 and the power delivery device 5. The vehicle 3 transmits vehicle information to the server 30 (step S11). In step S11, the third communication device 340 of the vehicle 3 transmits the vehicle information to the server 30. The vehicle information includes vehicle identification information, various parameters of the power reception device 20, current position information of the vehicle 3, and requested power. The vehicle ECU 330 calculates the requested power based on the SOC of the battery 320. In step S11, the vehicle ECU 330 causes the third communication device 340 to transmit the vehicle information at predetermined time intervals. The predetermined time is set depending a distance from the current position of the vehicle 3 to the starting point of the D-WPT lane. The shorter the distance from the vehicle 3 to the starting point of the D-WPT lane, the shorter the interval of the predetermined time intervals become.

Upon receiving the vehicle information from the vehicle 3, the server 30 identifies the vehicle identification information of the vehicle 3 that is located in the proximity region of the power delivery device 5 based on the current location information of the vehicle 3 included in the vehicle information (step S12). In step S12, the server 30 identifies the vehicle 3 that is located within a predetermined proximity region from the power delivery device 5 based on the current location information of the vehicle 3 and the position information of the power delivery device 5. The proximity region is set, for example, to a region within 500 meters.

Upon identifying the vehicle identification information of the vehicle 3, the server 30 transmits the vehicle information to the power delivery device 5 (step S13). In step S13, the transmission device of the server 30 transmits the vehicle information to the power delivery device 5.

Upon receiving the vehicle information from the server 30, the power delivery device 5 registers or deletes the vehicle identification information in an identification information list (step S14). In step S14, the power transmission ECU 110 registers or deletes the vehicle identification information in the identification information list such that the vehicle identification information associated with the vehicle information is registered in the identification information list without excess or deficiency.

Upon registering or deleting the vehicle identification information in the identification information list, the power delivery device 5 transmits the vehicle identification information registered in the identification information list to the server 30 (step S15). In step S15, the first communication device 120 of the power delivery device 5 transmits the vehicle identification information to the server 30.

Subsequently, upon receiving the vehicle identification information from the power delivery device 5, the server 30 transmits a list registration notification to the vehicle 3 corresponding to the vehicle identification information registered in the identification information list (step S16). In step S16, the communication device of the server 30 transmits the list registration notification to the vehicle 3. The list registration notification is a notification indicating that the vehicle identification information is registered in the identification information list, and includes the identification information of the power delivery device 5 and the location information of the power delivery device 5.

In this manner, when the vehicle 3 initiates the wide-range wireless communication, and both the power delivery device 5 and the vehicle 3 are in the state of communication setup and D-WPT service request A60, the communication setup through wide-range wireless communication is considered successful. This success of communication setup causes the state to transition to the D-WPT service session A70.

Reference is made again to FIG. 6. In the D-WPT service session A70, power is transmitted in a non-contact manner from the power transmission-side resonant circuit 240 of the power delivery device 5 to the power reception-side resonant circuit 410 of the vehicle 3, in a state in which a communication connection is established between the power delivery device 5 and the vehicle 3. The D-WPT service session A70 begins with the success of the communication setup and terminates with the termination of communication. Upon the termination of communication in the state of D-WPT service session A70, the state transitions to the D-WPT service session termination A80.

In the state of D-WPT service session termination A80, the vehicle 3 terminates the wide-range wireless communication with the power delivery device 5. The vehicle 3 and the power delivery device 5 are capable of receiving a trigger to terminate the D-WPT service session A70. Then, the vehicle ECU 330 prevents D-WPT from being initiated between the secondary device 22 and the vehicle 3 until the third communication device 340 receives the next notification (D-WPT service request signal).

The detailed activities of the D-WPT service session A70 are now described.

The D-WPT service session A70 includes a compatibility check and service authentication (Compatibility check/Service authentication) A110, fine positioning (Fine Positioning) A120 of the vehicle in the lateral direction, pairing and alignment check (Pairing/Alignment check) A130, magnetic coupling check (Magnetic Coupling Check) A140, power transfer execution (Perform Power Transfer) A150, standby (Stand-by) A160, and power transfer termination (Power transfer terminated) A170.

The compatibility check and service authentication A110 is now be described. Once the communication setup is successful, the vehicle ECU 330 and the power transmission ECU 110 check that the primary device 13 and the secondary device 22 are compatible. The compatibility check is performed on the power delivery device 5 side based on information associated with the vehicle identification information acquired through communication. Examples of items for the check include the minimum ground clearance of the secondary device 22, the shape type of the secondary device 22, the circuit topology of the secondary device 22, the self-resonant frequency of the secondary device 22, and the number of secondary coils 21.

In the compatibility check and service authentication A110, initially, the vehicle 3 transmits compatibility information (Compatibility Information) of the power reception device 20 from the third communication device 340 to the power delivery device 5. The first communication device 120 of the power delivery device 5 receives the compatibility information of the power reception device 20 from the vehicle 3. Then, the first communication device 120 of the power delivery device 5 transmits the compatibility information of the power transmission device 10 to the vehicle 3. The third communication device 340 of the vehicle 3 receives the compatibility information of the power transmission device 10 from the power delivery device 5.

The elements of the compatibility information transmitted from the vehicle 3 to the power delivery device 5 include vehicle identification information, WPT power classes, air gap classes, WPT operating frequency, WPT frequency adjustment, WPT type, WPT circuit topology, fine positioning method, pairing method, alignment method, and information regarding the presence or absence of a power adjustment function.

The elements of the compatibility information transmitted from the power delivery device 5 to the vehicle 3 include power delivery device identification information, WPT power class, air gap class, WPT operating frequency, WPT frequency adjustment, WPT type, WPT circuit topology, fine positioning method, pairing method, alignment method, and information regarding the presence or absence of a power adjustment function.

The names of each element are described in detail. Moreover, the description will cover each element of the compatibility information transmitted from the vehicle 3 to the power delivery device 5, and descriptions of elements that are duplicated in the compatibility information transmitted from the power delivery device 5 to the vehicle 3 are omitted.

The air gap class is information indicating the air gap class that the secondary device 22 is capable of receiving power. The WPT power class is information indicating the power class that the secondary device 22 is capable of receiving power. The WPT operating frequency is information indicating the frequency of the received power that the secondary device 22 receives. The WPT frequency adjustment is information indicating whether adjustment of the operating frequency is possible. The WPT type is information indicating the shape type of the secondary device 22 and indicates the coil shape of the secondary coil 21. Examples of the WTP type include circular and solenoid shapes. The WPT circuit topology is information indicating the connection structure between the secondary coil 21 and the resonant capacitor. Examples of the WTP circuit topology include series and parallel configurations. The fine positioning method is information indicating what method is used to perform positioning during alignment. The pairing method is a method by which the vehicle 3 performs pairing to identify the power delivery device 5. The alignment method indicates a method for locating the relative positions of the secondary device 22 and the primary device 13 before starting power transmission.

The fine positioning A120 for the vehicle in the lateral direction is now described. Prior to or in parallel with the pairing and alignment check A130, the vehicle 3 performs the fine positioning A120 for the vehicle in the lateral direction. If the vehicle ECU 330 determines that the vehicle 3 is approaching or entering a region where the power delivery device 5 is installed (WPT lane), the vehicle ECU 330 starts the fine positioning A120 for the vehicle in the lateral direction.

The vehicle ECU 330 guides the vehicle 3 to align the primary device 13 and the secondary device 22 within a range that establishes sufficient magnetic coupling for wireless power transfer.

The fine positioning A120 for the vehicle in the lateral direction is basically performed manually or automatically on the vehicle 3 side. The fine positioning A120 for the vehicle in the lateral direction is linkable with an autonomous driver assistance system (ADAS). The termination of the communication is the D-WPT service session termination A80.

Then, the activity of fine positioning A120 for the vehicle in the lateral direction continues until the vehicle 3 exits the D-WPT charging site or the state changes to communication termination, and can be executed based on the alignment information transmitted from the power delivery device 5 to the vehicle 3 through wide-range wireless communication.

The pairing and alignment check A130 is now described. The description herein is given separately for the pairing and the alignment check.

The pairing is now described. The P2PS interface, which performs short-range wireless communication, ensures that the primary device 13 and the secondary device 22 are uniquely paired. The process of the pairing state is as follows.

Initially, the vehicle ECU 330 recognizes that the vehicle 3 is approaching or entering the D-WPT lane. For example, the vehicle ECU 330 has map information including the D-WPT lane, and recognizes the approach or entry by comparing the map information with the position information of the vehicle itself obtained by the GPS receiver 360, such as the straight-line distance. The vehicle 3 transmits which D-WPT lane the vehicle 3 has approached to the server 30 through wide-range wireless communication. In short, the third communication device 340 notifies the cloud of a signal indicating that the vehicle 3 has approached one of the D-WPT lanes. Furthermore, if the vehicle ECU 330 recognizes the approach or entry of the vehicle 3 to the D-WPT lane, the fourth communication device 350 starts transmitting a modulated signal at regular intervals for pairing the primary device 13 and the secondary device 22.

Further, the power delivery device 5 can also recognize that the vehicle 3 is approaching or entering the D-WPT lane using information acquired from the server 30 through wide-range wireless communication. The server 30 assigns the vehicle identification information of the vehicle 3 that has approached each D-WPT lane to the power delivery device 5 corresponding to the approached lane. The power delivery device 5 only needs to refer to the vehicle identification information narrowed down by the server 30, so the authentication processing can be completed in a short time. If the power delivery device 5 recognizes that the vehicle 3 is approaching the D-WPT lane, the second communication device 130 goes into standby mode. In the standby mode, the second communication device 130 remains in a state of readiness to receive a modulated signal from the fourth communication device 350 of the vehicle 3. This modulated signal includes vehicle identification information.

If the second communication device 130 receives the modulated signal from the vehicle 3, the power delivery device 5 compares the vehicle identification information received through short-range wireless communication with the vehicle identification information in the identification information list obtained as a result of the wide-range wireless communication with multiple vehicles 3 approaching the D-WPT lane. This comparison allows the power delivery device 5 to identify the vehicle 3.

If the vehicle ECU 330 recognizes that the vehicle 3 is outside the D-WPT lane, the vehicle ECU 330 stops transmitting the modulated signal from the fourth communication device 350. The vehicle ECU 330 is capable of determining whether the vehicle has passed the D-WPT lane based on the map information and the position information of the vehicle itself.

If the power delivery device 5 determines that the vehicle 3 is not in motion in the D-WPT lane, or it determines that the vehicle 3 is not approaching the D-WPT lane, the power delivery device 5 stops waiting for a modulated signal from the fourth communication device 350.

The pairing is performed for the primary device 13 until the vehicle 3 exits the D-WPT charging site or the state changes to communication termination. Upon completion of the pairing, the state transitions to the alignment check.

The alignment check is now described. The alignment check is intended to check that the lateral distance between the primary device 13 and the secondary device 22 falls within an acceptable range. The alignment check is performed using short-range wireless communication (P2PS).

The alignment check is continuously performed based on P2PS until the vehicle 3 exits the D-WPT charging site or the state changes to communication termination.

The result of the alignment check can be transmitted from the first communication device 120 to the third communication device 340 through wide-range wireless communication.

The magnetic coupling check A140 is now described. In the magnetic coupling check A140, the power delivery device 5 checks the magnetic coupling state and checks that the secondary device 22 falls within the acceptable range. Upon completion of the magnetic coupling check A140, the state transitions to the power transfer execution A150.

The power transfer execution A150 is now described. In this state, the power delivery device 5 performs power transfer to the power reception device 20. The power transmission device 10 and the power reception device 20 need to have the ability to control the power to be transferred (power to be transmitted and power to be received) for the usefulness of the MF-D-WPT and the protection of the power reception device 20 and the battery 320. Larger power transfer helps to increase the travel distance of the power reception device 20 without static wireless charging and conductive charging. However, the capacity of the battery 320 varies depending on the model of vehicle 3, and the demand for the driving power can fluctuate with significant rapidity. One example of this rapid fluctuation is sudden regenerative braking. If regenerative braking is performed while traveling on the D-WPT lane, regenerative braking takes precedence, so that the received power from the power reception device 20 is supplied to the battery 320 in addition to the regenerative power. In this case, the power reception device 20 needs to adjust the power to be transferred to protect the battery 320 from overcharging.

Despite the necessity of power control, in this state, no additional communication is initiated between the power delivery device 5 and the power reception device 20. This is because communication is liable to impair response and accuracy in power control due to its instability and latency. Thus, the power delivery device 5 and the power reception device 20 perform power transfer and the control of the power transfer based on the information known up to this state.

The power delivery device 5 increases the transfer power level for the magnetic coupling check in response to a power request transmitted from the third communication device 340 using the wide-range wireless communication in advance. The power delivery device 5 maintains fluctuations in current and voltage within their respective ranges while attempting to maximize the power transferred during the transition.

The power reception device 20 basically receives the transmitted power from the power transmission device 10 without any control. However, the power reception device 20 initiates control in the case where the transmitted power exceeds or is about to exceed a limit, such as the rated power of the battery 320, which fluctuates depending on the charging state or drive power demand of the vehicle 3. In addition, the power control in the vehicle ECU 330 is also required to address malfunctions in wide-range wireless communication. These malfunctions can lead to inconsistencies between the power control target in the primary device 13 and the request from the third communication device 340, and lead to sudden failures of the power reception device 20 or the battery 320 during power transfer. The power reception device 20 controls the power to be transferred under the power request rate notified by the first communication device 120.

The power request is determined based on compatibility check information such as the WPT circuit topology, geometry, ground clearance, and electromagnetic compatibility (EMC) of the vehicle 3 and the primary device 13. These specifications result in different magnetic fields, and power needs to be transferred within a range that satisfies EMC.

The power control in the power transmission ECU 110 and the power reception device 20 is liable to interfere with each other. In particular, interference is liable to occur in the case where the power delivery device 5 attempts to achieve a power request larger than the latest power limit of the power reception device 20 through wide-range wireless communication. An example of such interference is rapid regenerative control in the vehicle 3 with a relatively small battery 320. Preferably, it is desirable for the power delivery device 5 to be able to detect inconsistencies between the power control target and the limits, and adjust the power transfer to eliminate the inconsistencies.

For example, if the power transfer is interrupted for a short period of time while the secondary device 22 is still above the primary device 13, for example, in the case where a foreign object on the primary device 13 is detected by the foreign object detection device 14 or the case where magnetic coupling is reduced due to misalignment of the secondary device 22, the state transitions to standby A160. Moreover, if the vehicle 3 is provided with a foreign object detection device, the foreign object can be detected on the vehicle 3 side.

If the secondary device 22 traverses beyond the primary device 13, the state transitions to the power transfer termination A170. In this case, the magnetic coupling between the two devices becomes weaker, so the power to be transferred decreases. The power delivery device 5 is capable of detecting that the magnetic coupling has weakened by monitoring the transfer power level, so the power delivery device 5 basically decides to transition to the power transfer termination A170 and then starts lowering the voltage to stop the power transfer.

The standby A160 is now described. In this state, if the power transfer is interrupted for a short period of time for any reason, and both the vehicle 3 and the power delivery device 5 are ready for the D-WPT, the state returns to the power transfer execution A150. If there is a possibility of the power transmission being interrupted, the state becomes the standby A160.

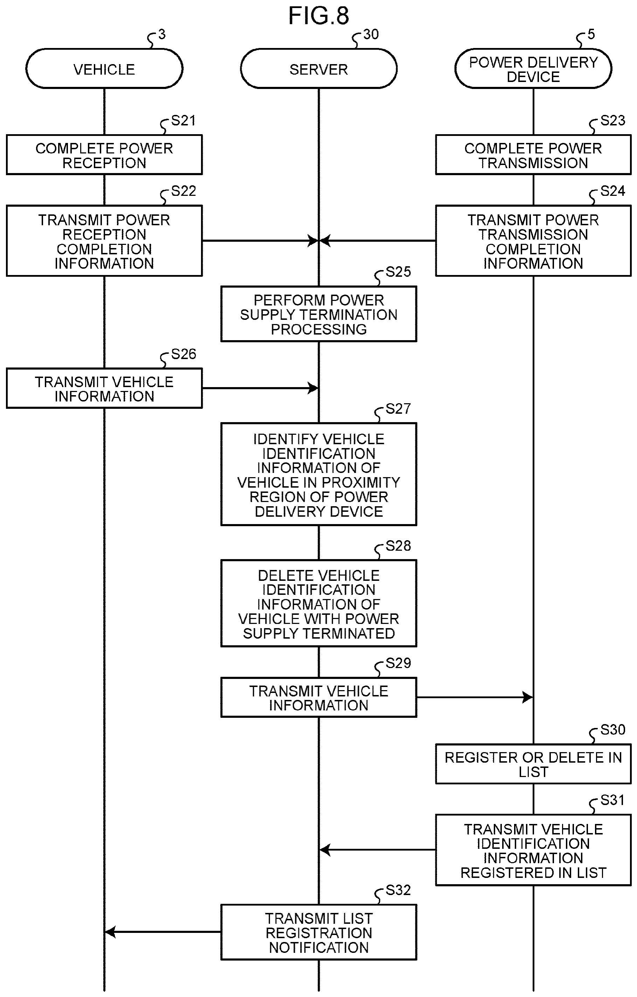

The power transfer termination A170 is now described. In this state, the power delivery device 5 reduces the power to be transferred to zero and retains or uploads power transfer result data such as total transferred power, power transfer efficiency, and failure history. Each data is tagged with the vehicle identification information. Finally, the power delivery device 5 deletes the vehicle identification information of the vehicle 3 that has passed the D-WPT lane. This allows the power delivery device 5 to prepare for subsequent pairing and power transfer to other vehicles. The processing sequence for the power transfer termination A170 is illustrated in FIG. 8.

FIG. 8 is a sequence diagram illustrating the operation after the completion of in-motion power supply from the power delivery device 5 to the vehicle 3. Upon completion of the power reception from the power delivery device 5 in the power reception device 20 of the vehicle 3 (step S21), the vehicle 3 transmits power reception completion information to the server 30 (step S22). In step S22, the power reception completion information is transmitted from the third communication device 340 of the vehicle 3. The power reception completion information includes, for example, vehicle identification information of the vehicle 3, received power from the power delivery device 5, power reception efficiency, and an abnormality detection result, as information related to the power reception from the power delivery device 5.

In performing the processing of step S21, the power delivery device 5 completes the power transmission to the vehicle 3 (step S23). The processing of step S21 and the processing of step S23 can be performed simultaneously or not. If the processing of step S23 is performed, the power delivery device 5 transmits power transmission completion information to the server 30 (step S24). In step S24, the power transmission completion information is transmitted from the first communication device 120 of the power delivery device 5.

If the server 30 receives the power reception completion information from the vehicle 3 and also receives the power transmission completion information from the power delivery device 5, the server 30 performs power supply termination processing to terminate the power supply from the power delivery device 5 to the vehicle 3 (step S25). In the power supply termination processing, based on the power reception completion information and the power transmission completion information, calculation processing of the amount of power supplied from the power delivery device 5 to the vehicle 3, and charging processing for the user of the vehicle 3 based on the calculated amount of power supplied, are performed.

Additionally, the vehicle 3 also transmits the vehicle information to the server 30 independently of the power supply termination processing (step S26). In step S26, the vehicle information is transmitted from the third communication device 340 of the vehicle 3.

If the server 30 receives the vehicle information from the vehicle 3 subsequent to performing the power supply termination processing, the server 30 identifies the vehicle identification information of the vehicle 3 located in the proximity region of each power delivery device 5 based on the vehicle information (step S27).

Then, if the power supply termination processing for a specific vehicle 3 at a specific power delivery device 5 has already been performed, the server 30 deletes the vehicle identification information of the specific vehicle 3 for which the power supply termination processing has already been performed from the vehicle identification information of the vehicle 3 located in the proximity region of that specific power delivery device 5 identified in the processing of step S27 (step S28).

Subsequently, the server 30 transmits, to each power delivery device 5, the vehicle information associated with the vehicle identification information that has not been deleted in the processing of step S28, from the vehicle identification information of the vehicle 3 identified as being located in the proximity region of each power delivery device 5 (step S29).

Following that the vehicle information is transmitted to each power delivery device 5 in the processing of step S29, if the power delivery device 5 receives the vehicle information from the server 30, the power delivery device 5 registers or deletes the vehicle identification information to or from the identification information list (step S30). The processing of step S30 is similar to the processing of step S14 in FIG. 7. Then, the power delivery device 5 transmits the vehicle identification information registered in the identification information list to the server 30 (step S31). The processing of step S31 is similar to the processing of step S15 in FIG. 7.

Subsequently, upon receiving the vehicle identification information from the power delivery device 5, the server 30 transmits a list registration notification to the vehicle 3 corresponding to the vehicle identification information registered in the identification information list (step S32). The processing of step S32 is similar to the processing of step S16 in FIG. 7.

As a result, in the case where the processing illustrated in FIG. 8 is performed, the vehicle identification information is registered in the identification information list for the vehicle 3 that is located in the proximity region of each power delivery device 5, whose power supply from the power delivery device 5 has not been completed, and for which a vehicle identification information deletion request has not been made. Then, in the case where the vehicle identification information of the vehicle 3 is registered in the identification information list of any power delivery installation 2, the vehicle 3 receives the list registration notification. Thus, upon reception of the list registration notification, the vehicle ECU 330 is capable of determining that the subject vehicle is registered in any of the power delivery devices 5. Then, in the case where the vehicle 3 moves out of the proximity region of the power delivery device 5, the vehicle identification information of the vehicle 3 is deleted from the identification information list of the power delivery device 5.

Reference is made again to FIG. 6. In addition, in the power transfer termination A170, the power reception device 20 does not need to do anything to set the transfer power to zero. The P2PS interface is kept active when the vehicle 3 is in the D-WPT lane, and the state of the power reception device 20 automatically transitions to pairing for the next power transfer from the primary device 13. As illustrated by the transition line in FIG. 6, the state transitions from the power transfer termination A170 to the pairing and alignment check A130. As illustrated in FIG. 6, satisfying a predetermined transition condition makes it possible to transition from the magnetic coupling check A140 to the pairing and alignment check A130, or from the power transfer execution A150 to the pairing and alignment check A130. The pairing can be performed individually for each of the multiple primary coils 11, or can be performed at a representative point by bundling the multiple primary coils 11.

Then, in the case where there is no D-WPT request from the vehicle ECU 330, or the case where the series of states from the communication setup and D-WPT service request A60 to the power transfer termination A170 is prohibited, the D-WPT service session A70 transitions to the D-WPT service session termination A80 to stop the wide-range wireless communication between the first communication device 120 and the third communication device 340. For example, the D-WPT is stopped when the state of charge in the battery 320 is an excessively high or when the power reception device 20 is excessively hot in temperature due to continuous power transfer. Such unnecessary D-WPT can be disabled by simply deactivating the P2PS interface. However, by stopping the wide-range wireless communication, the power transmission ECU 110 can release the memory occupied for the vehicle 3 without requiring the D-WPT by terminating the established wide-range wireless communication.

Further, the D-WPT service session A70 is not limited to the transitions illustrated by the transition lines in FIG. 6. In the D-WPT service session A70, When the activities following the pairing and alignment check A130 are completed, if the condition for the power transfer process to remain in the D-WPT service session A70 is satisfied, the state transitions to the compatibility check and service authentication A110, rather than the D-WPT service session termination A80. For example, if a predetermined transition condition is satisfied in the state of the magnetic coupling check A140, the state can transition to the compatibility check and service authentication A110.

In the wireless power transfer system 1 according to the embodiment, the power transmission ECU 110 compares information obtained through wide-range wireless communication with information obtained through short-range wireless communication using the consistency verification unit 540, and determines the consistency between the information obtained through wide-range wireless communication and the information obtained through short-range wireless communication by considering the calculated difference in latency between the wide-range wireless communication and the short-range wireless communication. Then, in the case where the information obtained through wide-range wireless communication and the information obtained through short-range wireless communication are consistent, the power transmission ECU 110 performs power transfer (power supply operation) from the power delivery device 5 to the power reception device 20 (vehicle 3). On the other hand, in the case where the information obtained through wide-range wireless communication and the information obtained through short-range wireless communication are discrepant and are inconsistent, the power transmission ECU 110 performs a predetermined operation. Moreover, the inconsistency includes various types of inconsistencies, such as the case where the same information, such as requested power (Power request) or power transfer termination (Power transfer terminated), is transmitted and received by the wide-range wireless communication and short-range wireless communication and the values are different, or the case where the state and communication content do not match.

In the wireless power transfer system 1 according to the embodiment, the predetermined operation can be, for example, power transfer (power supply operation) from the power delivery device 5 to the power reception device 20 based on the information obtained through short-range wireless communication. As a result, even if the wide-range wireless communication is interrupted due to a failure of the network 40 or the like and it is determined that there is an inconsistency, power transfer (power supply operation) from the power delivery device 5 to the power reception device 20 can be performed with an amount of power close to the actual request of the vehicle 3. In this event, if recovery of the wide-range wireless communication is not expected, the power transfer from the power delivery device 5 to the vehicle 3 can be stopped.

Additionally, in the wireless power transfer system 1 according to the embodiment, as the predetermined operation, for example, power transfer (power supply operation) from the power delivery device 5 to the power reception device 20 can be performed based on the more recent information of the information obtained through wide-range wireless communication and the information obtained through short-range wireless communication. This makes it possible to perform the power transfer (power supply operation) from the power delivery device 5 to the power reception device 20 based on the more recent information in chronological order.

Further, in the wireless power transfer system 1 according to the embodiment, as the predetermined operation, for example, the power transfer (power supply operation) from the power delivery device 5 to the power reception device 20 can be performed using the smaller of the power request value of either the power request value included in the information obtained through wide-range wireless communication or the power request value included in the information obtained through short-range wireless communication, as the target power value. This makes it possible to prevent overcharging of the battery 320.

In the wireless power transfer system 1 according to the embodiment, as the predetermined operation, for example, in the case where there is an inconsistency between the information obtained through wide-range wireless communication and the information obtained through short-range wireless communication, it is determined that an abnormality has occurred and power transfer (power supply operation) is stopped. This makes it possible to prevent overcharging of the battery 320.

Additionally, in the wireless power transfer system 1 according to the embodiment, instead of comparing the power request value included in the information obtained through wide-range wireless communication with the power request value included in the information obtained through short-range wireless communication at a certain time, the consistency verification unit 540 can compare, for example, the respective average values of the power request values included in the information obtained through wide-range wireless communication and the power request values included in the information obtained through short-range wireless communication, sampled over a certain period of time. For example, the consistency verification unit 540 can compare a moving average of the power request values included in the information obtained through wide-range wireless communication and a moving average of the power request values included in the information obtained through short-range wireless communication, which are calculated by the calculation unit 542, to determine the consistency. This makes it possible to determine the consistency appropriately even in the case where the power request value included in the information obtained through short-range wireless communication fluctuates frequently.

Further, in the wireless power transfer system 1 according to the embodiment, the consistency verification unit 540 can determine that there is an inconsistency when the power request value included in the information obtained through wide-range wireless communication and the power request value included in the information obtained through short-range wireless communication are such that one power request value is a value outside a preset range with respect to the other power request value. For example, it is conceivable that the power request value included in the information obtained through short-range wireless communication changes immediately, for example, in units of several tens of milliseconds, due to latency in the wide-range wireless communication relative to the short-range wireless communication, or due to frequent accelerator on-off or brake on-off operations of the vehicle 3. For this reason, upon comparing the power request value included in the information obtained through wide-range wireless communication with the power request value included in the information obtained through short-range wireless communication, for example, if the power request value included in the information obtained through wide-range wireless communication falls within a range of ±20% with respect to the power request value in the information obtained through short-range wireless communication, the consistency verification unit 540 determines that there is an inconsistency. On the other hand, if the power request value included in the information obtained through wide-range wireless communication is outside a range of ±20% with respect to the information obtained through short-range wireless communication, the consistency verification unit 540 determines that there is an inconsistency.

Further, in the wireless power transfer system 1 according to the embodiment, if the power delivery device 5 acquires the power request value from the fourth communication device 350 of the vehicle 3 through the short-range wireless communication by the second communication device 130, a period during which the change of the power request value is prohibited (e.g., 1 to 10[s]) can be provided from the acquisition time. This makes it possible to determine the consistency appropriately even in the case where the power request value included in the information obtained through short-range wireless communication fluctuates frequently.

Additionally, in the wireless power transfer system 1 according to the embodiment, if the discrepancy persistence time, measured by the time measurement unit 541, during which the discrepancy between the information obtained through wide-range wireless communication and the information obtained through short-range wireless communication persists, exceeds a predetermined time, the consistency verification unit 540 determines that there is an inconsistency. For example, if the discrepancy persistence time, during which the discrepancy between the power request value included in the information obtained through wide-range wireless communication and the power request value included in the information obtained through short-range wireless communication persists, exceeds a predetermined time, the consistency verification unit 540 determines that the power request value included in the information obtained through wide-range wireless communication and the power request value included in the information obtained through short-range wireless communication are inconsistent.

Furthermore, in the wireless power transfer system 1 according to the embodiment, in the case where the short-range wireless communication is interrupted, the power transfer from the power delivery device 5 to the vehicle 3 can be immediately stopped.

Additionally, in the case where the SOC of the battery 320 equipped in the vehicle 3 is equal to or lower than a predetermined value, the power transfer can be performed from the power delivery device 5 to the vehicle 3 unconditionally, regardless of the communication status of the wide-range wireless communication and the short-range wireless communication.

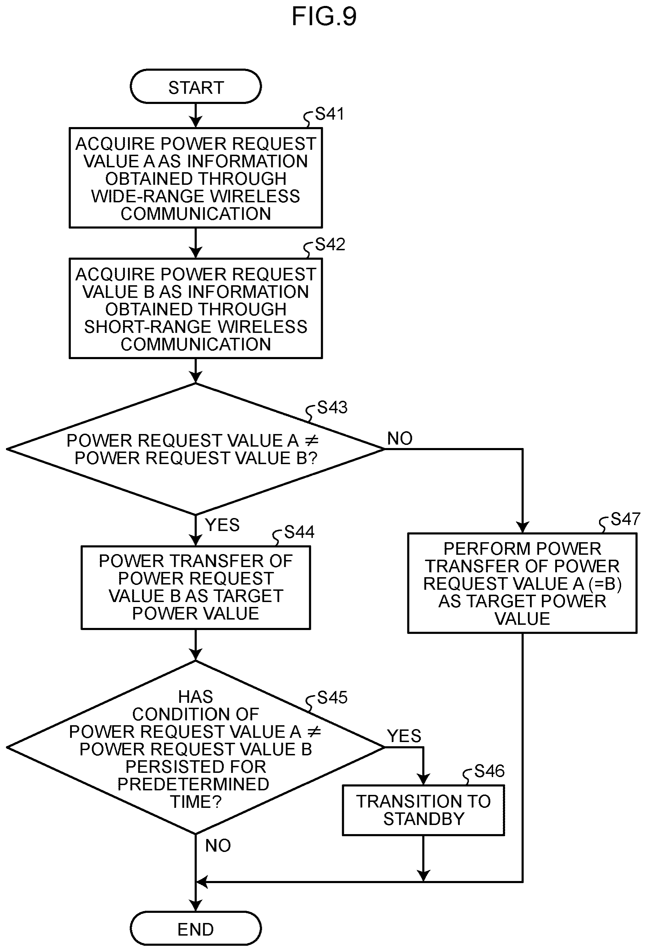

FIG. 9 is a flowchart illustrating a first example of control for performing power transfer by comparing the information obtained through wide-range wireless communication with the information obtained through short-range wireless communication.

Initially, the power delivery device 5 acquires a power request value A as the information obtained through wide-range wireless communication from the third communication device 340 of the vehicle 3 via the first communication device 120 (step S41). Subsequently, the power delivery device 5 acquires a power request value B as the information obtained through short-range wireless communication from the fourth communication device 350 of the vehicle 3 via the second communication device 130 (step S42). Then, the power delivery device 5 determines whether the power request value A differs from the power request value B (A ≠ B) via the consistency verification unit 540 of the power transmission ECU 110 (step S43). If the power delivery device 5 determines that the power request value A differs from the power request value B (A ≠ B), that is, the power request value A and the power request value B are inconsistent (Yes in step S43), the power delivery device 5 executes power transfer with the power request value B as the target power value (step S44). Next, the power delivery device 5 determines whether the condition that the power request value A differs from the power request value B (A ≠ B) has persisted for a predetermined time, based on the time measured by the time measurement unit 541 (step S45). If the power delivery device 5 determines that the condition that the power request value A differs from the power request value B (A ≠ B) has not persisted for a predetermined time (No in step S45), the power delivery device 5 terminates the series of control operations. On the other hand, if the power delivery device 5 determines that the condition that the power request value A differs from the power request value B (A ≠ B) has persisted for a predetermined time (Yes in step S45), the power delivery device 5 transitions to standby (Stand-by) (step S46). Then, the power delivery device 5 terminates the series of control operations.

Further, in step S43, if the power delivery device 5 determines that the power request value A is equal to the power request value B (A = B), that is, that the power request value A and the power request value B are consistent (No in step S43), the power delivery device 5 executes power transfer with the power request value A (= power request value B) as the target power value (step S47). Then, the power delivery device 5 terminates the series of control operations.

As a result, in the wireless power transfer system 1 according to the embodiment, it is possible to perform power transfer from the power delivery device 5 to the vehicle 3 while ensuring an amount of power close to the actual request.

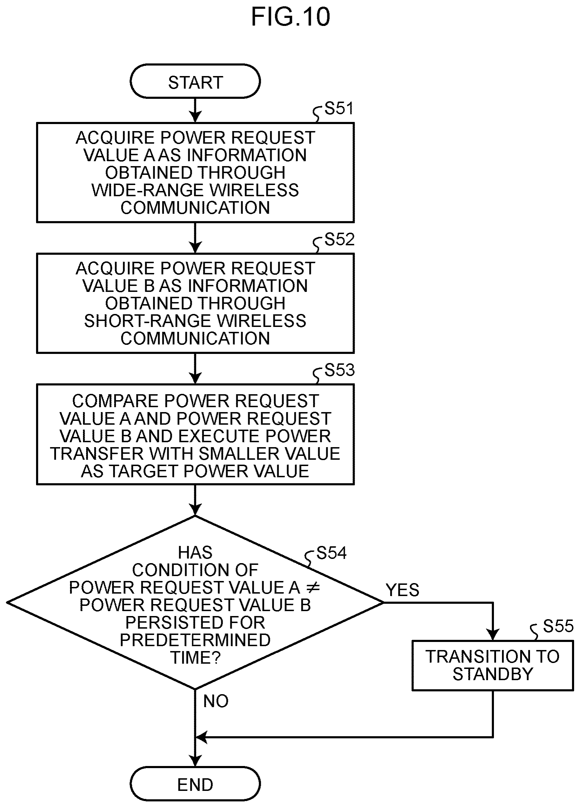

FIG. 10 is a flowchart illustrating a second example of control for performing power transfer by comparing the information obtained through wide-range wireless communication with the information obtained through short-range wireless communication.

Initially, the power delivery device 5 acquires the power request value A as the information obtained through wide-range wireless communication from the third communication device 340 of the vehicle 3 via the first communication device 120 (step S51). Subsequently, the power delivery device 5 acquires the power request value B as the information obtained through short-range wireless communication from the fourth communication device 350 of the vehicle 3 via the second communication device 130 (step S52). Then, the power delivery device 5 compares the power request value A and the power request value B via the consistency verification unit 540 of the power transmission ECU 110, and executes power transfer with the smaller one as the target power value (step S53). Next, the power delivery device 5 determines whether the condition that the power request value differs from the power request value B (A ≠ B) has persisted for a predetermined time based on the time measured by the time measurement unit 541 (step S54). If the power delivery device 5 determines that the condition that the power request value A differs from the power request value B (A ≠ B) has not persisted for a predetermined time (No in step S54), the power delivery device 5 terminates the series of control operations. On the other hand, if the power delivery device 5 determines that the condition that the power request value A differs from the power request value B (A ≠ B) has persisted for a predetermined time (Yes in step S54), the power delivery device 5 transitions to standby (Stand-by) (step S55). Then, the power delivery device 5 terminates the series of control operations.

Thus, in the wireless power transfer system 1 according to the embodiment, it is possible to suppress power transfer from the power delivery device 5 to the vehicle 3 with an excessive amount of power, and to suppress overcharging of the battery 320.

### Industrial Applicability

The present invention provides an in-motion non-contact power supply system, power supply device, and power reception device capable of performing a predetermined operation corresponding to the consistency between the information obtained through wide-range wireless communication and the information obtained through short-range wireless communication.

### Reference Signs List

- 1: WIRELESS POWER TRANSFER SYSTEM
- 2: POWER DELIVERY INSTALLATION
- 3: VEHICLE
- 4: ROAD
- 5: POWER DELIVERY DEVICE
- 6: AC POWER SOURCE
- 10: POWER TRANSMISSION DEVICE
- 11: PRIMARY COIL
- 20: POWER RECEPTION DEVICE
- 21: SECONDARY COIL
- 120: FIRST COMMUNICATION DEVICE
- 130: SECOND COMMUNICATION DEVICE
- 340: THIRD COMMUNICATION DEVICE
- 350: FOURTH COMMUNICATION DEVICE
- 320: BATTERY
- 540: CONSISTENCY VERIFICATION UNIT
- 541: TIME MEASUREMENT UNIT
- 542: CALCULATION UNIT

## Claims

1. An in-motion non-contact power supply system that supplies power in a non-contact manner from a road-side power supply device to a vehicle in motion equipped with a vehicle-side power reception device, wherein
the road-side power supply device includes a first communication device and a second communication device, the first communication device being configured to perform wide-range wireless communication with the vehicle-side power reception device, the second communication device being configured to perform short-range wireless communication with the vehicle-side power reception device, the short-range wireless communication being capable of communicating a smaller amount of information than the wide-range wireless communication and having a faster response time than the wide-range wireless communication,
the vehicle-side power reception device includes a third communication device and a fourth communication device, the third communication device being configured to perform the wide-range wireless communication with the road-side power supply device, the fourth communication device being configured to perform the short-range wireless communication with the road-side power supply device,
the road-side power supply device includes a consistency verification means configured to compare information obtained through the wide-range wireless communication transmitted from the third communication device and acquired by the first communication device with information obtained through the short-range wireless communication transmitted from the fourth communication device and acquired by the second communication device, and to determine consistency between the information obtained through the wide-range wireless communication and the information obtained through the short-range wireless communication by considering a difference in latency between the wide-range wireless communication and the short-range wireless communication,
the consistency verification means compares the information obtained through the wide-range wireless communication with the information obtained through the short-range wireless communication,
the road-side power supply device, in a case where the information obtained through the wide-range wireless communication and the information obtained through the short-range wireless communication are consistent, performs a power supply operation to the vehicle-side power reception device, and
the road-side power supply device, in the case where the information obtained through the wide-range wireless communication and the information obtained through the short-range wireless communication are inconsistent, performs a predetermined operation.

2. The in-motion non-contact power supply system according to claim 1, wherein
the consistency verification means includes a time measurement means configured to measure a discrepancy persistence time during which a discrepancy between the information obtained through the wide-range wireless communication and the information obtained through the short-range wireless communication persists, and
the consistency verification means determines that the information obtained through the wide-range wireless communication and the information obtained through the short-range wireless communication are inconsistent upon the discrepancy persistence time exceeding a predetermined time.

3. The in-motion non-contact power supply system according to claim 1, wherein
the information obtained through the wide-range wireless communication and the information obtained through the short-range wireless communication each includes a power request value, and
the consistency verification means determines that there is an inconsistency when a discrepancy exists between the power request value included in the information obtained through the wide-range wireless communication and the power request value included in the short-range wireless communication.

4. The in-motion non-contact power supply system according to claim 3, wherein
the consistency verification means includes a calculation means configured to calculate a moving average of the power request value included in the information obtained through the wide-range wireless communication and a moving average of the power request value included in the information obtained through the short-range wireless communication, and
the consistency verification means determines the consistency by comparing the moving average of the power request value included in the information obtained through the wide-range wireless communication with the moving average of the power request value included in the information obtained through the short-range wireless communication.

5. The in-motion non-contact power supply system according to claim 4, wherein the consistency verification means determines that there is a consistency when the power request value included in the information obtained through the wide-range wireless communication and the power request value included in the short-range wireless communication satisfy a condition in which one of the power request values falls within a predetermined range of the other power request value.

6. The in-motion non-contact power supply system according to claim 3, wherein the predetermined operation includes performing the power supply operation from the road-side power supply device to the vehicle-side power reception device using, as a target power value, a smaller one of the power request value included in the information obtained through the wide-range wireless communication and the power request value included in the information obtained through the short-range wireless communication.

7. The in-motion non-contact power supply system according to any one of claims 1 to 5, wherein, in the case where the information obtained through the wide-range wireless communication and the information obtained through the short-range wireless communication are inconsistent, the power supply operation from the road-side power supply device to the vehicle-side power reception device is performed as the predetermined operation based on the information obtained through the short-range wireless communication.

8. The in-motion non-contact power supply system according to any one of claims 1 to 5, wherein, in the case where the information obtained through the wide-range wireless communication and the information obtained through the short-range wireless communication are inconsistent, the power supply operation from the road-side power supply device to the vehicle-side power reception device is stopped as the predetermined operation.

9. The in-motion non-contact power supply system according to any one of claims 1 to 5, wherein, in the case where the information obtained through the wide-range wireless communication and the information obtained through the short-range wireless communication are inconsistent, the power supply operation from the road-side power supply device to the vehicle-side power reception device is performed as the predetermined operation based on a more recent one of the information obtained through the wide-range wireless communication and the information obtained through the short-range wireless communication.

10. A power supply device provided on a road on which a vehicle is in motion to supply power in a non-contact manner to the vehicle equipped with a vehicle-side power reception device, the power supply device comprising:
a first communication device configured to perform wide-range wireless communication with a third communication device of the vehicle-side power reception device; a second communication device configured to perform short-range wireless communication with a fourth communication device of the vehicle-side power reception device, the short-range wireless communication being capable of communicating a smaller amount of information than the wide-range wireless communication and having a faster response time than the wide-range wireless communication; and
a consistency verification means configured to compare information obtained through the wide-range wireless communication transmitted from the third communication device and acquired by the first communication device with information obtained through the short-range wireless communication transmitted from the fourth communication device and acquired by the second communication device, and to determine consistency between the information obtained through the wide-range wireless communication and the information obtained through the short-range wireless communication by considering a difference in latency between the wide-range wireless communication and the short-range wireless communication, wherein
the consistency verification means compares the information obtained through the wide-range wireless communication with the information obtained through the short-range wireless communication,
the power supply device, in a case where the information obtained through the wide-range wireless communication and the information obtained through the short-range wireless communication are consistent, performs a power supply operation to the vehicle-side power reception device, and
the power supply device, in the case where the information obtained through the wide-range wireless communication and the information obtained through the short-range wireless communication are inconsistent, performs a predetermined operation.

11. A power reception device mounted on a vehicle in motion to receive power supplied in a non-contact manner from a road-side power supply device, the power reception device comprising:
a third communication device configured to perform wide-range wireless communication with a first communication device of the road-side power supply device; and a fourth communication device configured to perform short-range wireless communication with a second communication device of the road-side power supply device, the short-range wireless communication being capable of communicating a smaller amount of information than the wide-range wireless communication and having a faster response time than the wide-range wireless communication, wherein
the road-side power supply device includes a consistency verification means configured to compare information obtained through the wide-range wireless communication transmitted from the third communication device and acquired by the first communication device, with information obtained through the short-range wireless communication transmitted from the fourth communication device and acquired by the second communication device, and to determine consistency between the information obtained through the wide-range wireless communication and the information obtained through the short-range wireless communication by considering a difference in latency between the wide-range wireless communication and the short-range wireless communication, the consistency verification means comparing the information obtained through the wide-range wireless communication and the information obtained through the short-range wireless communication,
the power reception device, in a case where the information obtained through the wide-range wireless communication and the information obtained through the short-range wireless communication are consistent, receives power through the power supply operation from the road-side power supply device, and
in a case where the information obtained through the wide-range wireless communication and the information obtained through the short-range wireless communication are inconsistent, a predetermined operation determined by the road-side power supply device is performed.
